# EUROPEAN PATENT APPLICATION

(11) **EP 4 736 712 A1**
(43) Date of publication of application: **06.05.2026**
(21) Application number: 24830151.7
(22) Date of filing: 06.05.2024
(51) Int. Cl.: A47J 37/06

(54) **COOKING BOX AND COOKING APPLIANCE**

(30) Priority: 30.06.2023 CN 202310795422
(71) Applicant: Guangdong Midea Kitchen Appliances Manufacturing Co., Ltd., Foshan, Guangdong 528311 (CN)
(72) Inventor: LIU, Jin, Foshan, Guangdong 528311 (CN); LI, Guobao, Foshan, Guangdong 528311 (CN); YUAN, Chong, Foshan, Guangdong 528311 (CN); LU, Yangjia, Foshan, Guangdong 528311 (CN); NIE, Rongqi, Foshan, Guangdong 528311 (CN)
(74) Representative: RGTH
(86) International application number: PCT/CN2024/091243
(87) International publication number: WO 2025/001503

(57) **Abstract**

The present application provides a cooking chamber assembly and a cooking appliance. The cooking chamber assembly comprises: a main body, comprising a cooking cavity; an air frying assembly, configured to blow hot air into the cooking cavity, wherein a plurality of accommodating recesses are formed in the wall surfaces of the main body, at least one of the accommodating recesses are recessed towards the cooking cavity, and at least part of the air frying assembly is disposed in the accommodating recesses recessed towards the cooking cavity. The accommodating recesses recessed towards the cooking cavity are formed in the wall surfaces of the main body, and at least part of the air frying assembly is mounted in the accommodating recesses, so that the height of the air frying assembly projecting from the wall surfaces of the main body can be decreased, thereby decreasing the distance between a housing of a cooking appliance and the wall surfaces of the cooking chamber assembly, enabling the cooking appliance to have a narrow bezel, reducing the size of the cooking appliance, making the structure of the cooking appliance more compact, and facilitating miniaturization design of the product.

## Description

This application claims priority to Chinese Patent Application No. 202310795422.1 filed with the China National Intellectual Property Administration on June 30, 2023 and entitled "COOKING CHAMBER ASSEMBLY AND COOKING APPLIANCE", the entire contents of which are incorporated herein by reference.

### FIELD

The present application relates to the field of household electrical appliances, and more particularly, to a cooking chamber assembly and a cooking appliance.

### BACKGROUND

In the prior art, for a cooking appliance with an air frying function, an air frying assembly typically occupies a relatively large installation space, which results in a large size of the cooking appliance and a non-compact product structure.

### SUMMARY

The present application aims to solve at least one of the problems existing in the prior art or related art.

Thus, a first purpose of the present application is to provide a cooking chamber assembly.

A second purpose of the present application is to provide a cooking appliance.

To achieve at least one of the above purposes, according to the first aspect of the present application, a cooking chamber assembly is provided, comprising: a main body, comprising a cooking cavity; an air frying assembly, configured to blow hot air into the cooking cavity, wherein a wall surface of the main body is provided with a plurality of accommodating recesses, at least part of the accommodating recesses are recessed in a direction towards the cooking cavity, and at least part of the air frying assembly is disposed in the accommodating recesses recessed towards the cooking cavity.

The cooking chamber assembly provided in the present application can be applied to a cooking appliance. The cooking chamber assembly comprises the main body, and the main body comprises the cooking cavity for accommodating food ingredients. When the cooking appliance is in operation, the cooking appliance cooks the food ingredients placed inside the cooking cavity.

Furthermore, the cooking chamber assembly comprises the air frying assembly, and the air frying assembly can cook the food ingredients in the cooking cavity in an air frying manner. In some embodiments, in the case that the air frying assembly is in operation, it can blow hot air into the cooking cavity, and the food ingredients in the cooking cavity can be heated by the hot air to achieve a cooking effect of air frying. The air frying assembly is composed of a plurality of components, resulting in a certain thickness of the air frying assembly. To reduce the height of the air frying assembly projecting from the outer wall of the main body, the present application provides a plurality of accommodating recesses in the wall surfaces of the main body. By arranging at least part of the air frying assembly in the accommodating recesses, the height of the air frying assembly projecting from the wall surfaces of the main body can be reduced. In some embodiments, the wall surfaces of the main body are provided with a plurality of accommodating recesses, and at least one of the accommodating recesses are recessed towards the cooking cavity, that is, the recess walls of the accommodating recesses extend into the cooking cavity, and at least part of the air frying assembly is disposed in the accommodating recesses recessed towards the cooking cavity. In this way, by allowing the air frying assembly to occupy part of the space of the cooking cavity, the height of the air frying assembly projecting from the wall surfaces of the main body can be reduced, to reduce the distance between a housing of the cooking appliance and the wall surfaces of the cooking chamber assembly, then enabling the cooking appliance to have a narrow bezel and reducing the size of the cooking appliance. The bezel of the cooking appliance to which the cooking chamber assembly is applied in the present application can be narrowed to 30mm.

Furthermore, the various components of the air frying assembly employ a nested configuration, and thus the height of the air frying assembly is reduced. By using the structure of the nested configuration, the height of the air frying assembly is reduced to 50 mm, further decreasing the size of the cooking appliance to which the cooking chamber assembly is applied.

A wall surface of the main body is provided with the accommodating recesses recessed in a direction towards the cooking cavity, and at least part of the air frying assembly is disposed in the accommodating recesses, and the height of the air frying assembly projecting from the wall surfaces of the main body can be decreased, to decrease the distance between the housing of a cooking appliance and the wall surfaces of the cooking chamber assembly, enabling the cooking appliance to have a narrow bezel, reducing the size of the cooking appliance, making the structure of the cooking appliance more compact, and facilitating miniaturization design of the product.

The above cooking chamber assembly according to the present application may further have the following distinguishing technical features.

In the above embodiment, furthermore, the air frying assembly comprises: a fan assembly configured to generate airflow; and a heating assembly configured to heat the airflow generated by the fan assembly to form hot air. The main body comprises a first top plate forming the top wall of the cooking cavity. The plurality of accommodating recesses comprise a first accommodating recess and a second accommodating recess, which are arranged in the first top plate. The first accommodating recess is recessed towards the cooking cavity, and the second accommodating recess protrudes away from the cooking cavity. At least part of the fan assembly is disposed in the first accommodating recess, and at least part of the heating assembly is disposed in the second accommodating recess.

In the embodiment, the structure of the air frying assembly is defined. The air frying assembly comprises the fan assembly and the heating assembly, wherein the fan assembly is configured to generate airflow, and the heating assembly is configured to generate heat. In the case that the heating assembly is in operation, it heats the airflow generated by the fan assembly to form hot air. The fan assembly can blow the hot air generated by the heating of the heating assembly into the cooking cavity, to perform air frying on the food ingredients inside the cooking cavity.

In a possible embodiment, the heating assembly is a heating tube, and the heating assembly is disposed at the side of the fan assembly facing the cooking cavity, to facilitate heating the airflow generated by the fan assembly through the heating assembly.

Furthermore, in order to be able to reduce the height of the air frying assembly projecting from the wall surfaces of the main body, the present application provides the first top plate with a plurality of accommodating recesses in the main body. By mounting at least part of the air frying assembly in the accommodating recesses, the height of the air frying assembly projecting from the wall surfaces of the main body is reduced. In some embodiments, the main body comprises the first top plate forming the top wall of the cooking cavity. The plurality of accommodating recesses comprise the first accommodating recess and the second accommodating recess, and the first accommodating recess and the second accommodating recess are both disposed in the first top plate, wherein, the first accommodating recess is recessed towards the cooking cavity, and the second accommodating recess protrudes away from the cooking cavity, that is, the notch of the first accommodating recess faces the outside, and the notch of the second accommodating recess faces the inside of the cooking cavity. The air frying assembly is disposed at a top portion of the main body, and comprises the fan assembly and the heating assembly, wherein at least part of the fan assembly is disposed in the first accommodating recess, and at least part of the heating assembly is disposed in the second accommodating recess. In this way, firstly, the height of the fan assembly projecting from the first top plate can be reduced, thus achieving the technical effect of a narrow bezel for the cooking appliance; secondly, the space of the cooking cavity occupied by the heating assembly can be reduced. Moreover, since the opening of the second accommodating recess faces the inside of the cooking cavity, more heat generated by the heating assembly is directed into the cooking cavity, thus improving the heating efficiency.

Furthermore, the first top plate is provided with an opening communicating with the cooking cavity. In the case that the air frying assembly is in operation, the fan assembly generates an airflow, which is blown into the cooking cavity through the opening of the first top plate. The heating assembly generates heat to heat the airflow generated by the fan assembly, thus forming hot air. In this way, the food ingredients in the cooking cavity can be heated by the hot air to achieve the cooking effect of air frying.

By arranging in the first top plate the first accommodating recess recessed towards the cooking cavity and the second accommodating recess protruding away from the cooking cavity, and mounting at least part of the fan assembly in the first accommodating recess and mounting the heating assembly in the second accommodating recess, firstly, the height of the fan assembly projecting from the first top plate can be reduced, thus achieving the technical effect of a narrow bezel for the cooking appliance; and secondly, the space of the cooking cavity occupied by the heating assembly can be reduced, to improve the utilization rate of the space of the cooking cavity.

In the above embodiment, furthermore, the fan assembly comprises: a drive motor; and a plurality of fan blades connected to the drive motor, the drive motor being configured to drive the plurality of fan blades to rotate and then to generate airflow. The main body further comprises a second top plate, which is disposed at the side of the first top plate away from the cooking cavity. The second top plate is provided with a third accommodating recess recessed towards the cooking cavity. At least part of the drive motor is disposed in the third accommodating recess, and at least part of the fan blades are disposed in the first accommodating recess.

In the embodiment, the structure of the fan assembly is defined. The fan assembly comprises the drive motor and a plurality of fan blades which are connected to the drive motor. In the case that the fan assembly is in operation, the drive motor drives the plurality of fan blades to rotate and then to generate airflow. Wherein, the plurality of fan blades are disposed at the side of the drive motor facing the cooking cavity.

Furthermore, to be able to reduce the height of the fan assembly projecting from the wall surfaces of the main body, the present application further provides the second top plate with the third accommodating recess in the main body, to reduce the height of the fan assembly projecting from the wall surfaces of the main body. In some embodiments, the second top plate is disposed at the side of the first top plate away from the cooking cavity, and the second top plate is provided with the third accommodating recess which is recessed towards the cooking cavity. At least part of the drive motor is disposed in the third accommodating recess, and at least part of the fan blades are disposed in the first accommodating recess. In this way, firstly, the height of the fan assembly projecting from the wall surfaces of the main body can be reduced, thus achieving the technical effect of a narrow bezel for the cooking appliance; secondly, the second top plate isolates the drive motor from the cooking cavity, and this reduces the impact of the high temperature inside the cooking cavity on the drive motor and extends the service life of the drive motor.

By arranging the second top plate in the main body and mounting the drive motor in the third accommodating recess recessed towards the cooking cavity, the height of the drive motor projecting from the wall surfaces of the main body can be reduced, to reduce the height of the fan assembly projecting from the wall surfaces of the main body, which is conducive to achieving the technical effect of a narrow bezel for the cooking appliance.

In the above embodiment, furthermore, the cooking chamber assembly further comprises an air distribution plate, which is arranged at the side of the fan assembly facing the cooking cavity. The air distribution plate is provided with a plurality of air outlets, which are configured to discharge the airflow generated by the fan assembly into the cooking cavity.

In the embodiment, the structure of the cooking chamber assembly is further defined. To allow the hot air to be uniformly discharged into the cooking cavity, the present application further provides the air distribution plate for discharging air in the cooking chamber assembly. The air distribution plate is arranged at the side of the fan assembly facing the cooking cavity, and is provided with a plurality of air outlets, and the hot air can be discharged into the cooking cavity through the plurality of air outlets. The plurality of air outlets are evenly distributed in the air distribution plate, and the flow direction of the hot air can be adjusted through the evenly distributed air outlets, and this enables the hot air to be uniformly discharged into the cooking cavity.

Furthermore, there is a certain distance between the air distribution plate and the first top plate. In this way, the hot air can first flow between the first top plate and the air distribution plate, and this allows the hot air to fully flow to the positions of the plurality of air outlets, and then the hot air is discharged into the cooking cavity through the plurality of air outlets, and the hot air can be blown into the cooking cavity more uniformly.

By arranging the air distribution plate at the side of the fan assembly facing the cooking cavity and providing a plurality of air outlets in the air distribution plate, the hot air can be discharged into the cooking cavity through the plurality of air outlets, to enable the hot air to be evenly discharged into the cooking cavity, allowing the food ingredients to be heated uniformly and improving the cooking effect.

In the above embodiment, furthermore, the cooking chamber assembly further comprises a microwave assembly, which is disposed at the side of the main body away from the air frying assembly. A plurality of feeding ports are provided in the side of the microwave assembly facing the cooking cavity, and the microwave assembly radiates microwaves into the cooking cavity through the feeding ports.

In the embodiment, the structure of the cooking chamber assembly is further defined. To enable the cooking appliance to have a plurality of cooking modes and meet the diverse needs of users, the present application further disposes the microwave assembly in the cooking chamber assembly. The microwave assembly can perform microwave heating on the food ingredients inside the cooking cavity. The microwave assembly and the air frying assembly can operate independently or operate simultaneously. In this way, the cooking appliance can be equipped with a plurality of cooking modes to satisfy different needs of users and enhance the use convenience for users.

Furthermore, the microwave assembly is disposed at the side of the main body away from the air frying assembly. In this way, when the microwave assembly and the air frying assembly operate simultaneously, two sides of the food ingredients can be heated at the same time, to improve the cooking effect. In addition, arranging the microwave assembly at the side of the main body away from the air frying assembly can make the structure of the cooking chamber assembly more compact, which is conducive to the miniaturization design of the product. In a possible embodiment, the microwave assembly is disposed at a bottom portion of the main body, and the air frying assembly is disposed at a top portion of the main body.

Furthermore, the structure of the microwave assembly is defined. The plurality of feeding ports are arranged in the side of the microwave assembly facing the cooking cavity, and the microwave assembly can radiate microwaves into the cooking cavity through the plurality of feeding ports. Compared with a traditional structure that transmits microwaves into the cooking cavity by a stirrer, the present application radiates microwaves into the cooking cavity through a plurality of feeding ports, which not only achieves uniform microwave radiation into the cooking cavity, but also reduces the space occupied by the microwave assembly, to reduce the volume of the cooking chamber assembly, making the structure of the cooking chamber assembly more compact and facilitating the miniaturization design of the product. The plurality of feeding ports radiate microwaves into the cooking cavity respectively, and the microwaves radiated by the plurality of feeding ports are mutually superimposed, to balance the microwave field distribution in each area of the cooking cavity and heat the food ingredients uniformly. The bottom wall of the cooking cavity is made of glass that can transmit microwaves, and the feeding ports can radiate microwaves into the cooking cavity through the bottom wall of the cooking cavity.

By arranging the microwave assembly in the cooking chamber assembly, the cooking appliance can have a cooking mode of microwave heating, to meet a plurality of cooking needs of users and improve the use convenience for users. By arranging the plurality of feeding ports in the microwave assembly and radiating microwaves into the cooking cavity through the plurality of feeding ports, firstly, the microwaves radiated by the plurality of feeding ports can be mutually superimposed, to balance the microwave field distribution in each area of the cooking cavity and heat the food ingredients uniformly; secondly, a stirring device can be omitted, which reduces the space occupied by the microwave assembly, to reduce the size of the cooking chamber assembly, making the structure of the cooking chamber assembly more compact and facilitating the miniaturization design of the product.

In the above embodiment, furthermore, the microwave assembly comprises: a microwave generating device configured to generate microwaves; and a plurality of waveguide plates defining a waveguide cavity. The microwave generating device is in communication with the waveguide cavity, and the plurality of feeding ports are arranged in the top wall of the waveguide cavity.

In the embodiment, the structure of the microwave assembly is defined. The microwave assembly comprises the microwave generating device and the plurality of waveguide plates, wherein the microwave generating device is configured to generate microwaves, and the plurality of waveguide plates enclose the waveguide cavity for transmitting microwaves. In some embodiments, the waveguide cavity is in communication with the microwave generating device. The microwaves generated by the microwave generating device first enter the waveguide cavity and propagate along the direction towards the cooking cavity inside the waveguide cavity. The plurality of feeding ports are arranged in the top wall of the waveguide cavity, and the microwaves are fed into the cooking cavity through the plurality of feeding ports to realize the propagation of microwaves.

By arranging the microwave generating device and the plurality of waveguide plates in the microwave assembly, the microwaves generated by the microwave generating device can be transmitted into the cooking cavity through the waveguide cavity enclosed by the plurality of waveguide plates, thus realizing the propagation of the microwaves.

In some embodiments, exemplarily, the cooking chamber assembly further comprises a waveguide port, which is arranged in the bottom wall of the waveguide cavity and serves to communicate the waveguide cavity with the microwave generating device.

In the embodiment, the structure of the cooking chamber assembly is further defined. To transmit the microwaves generated by the microwave generating device into the waveguide cavity, the present application further provides the waveguide port in the bottom wall of the waveguide cavity. The waveguide port can communicate the microwave generating device with the waveguide cavity, and the microwaves generated by the microwave generating device can be transmitted into the waveguide cavity through the waveguide port, to realize the propagation of the microwaves.

By providing the waveguide port in the bottom wall of the waveguide cavity that communicates with the microwave generating device, the microwaves generated by the microwave generating device can be transmitted into the waveguide cavity through the waveguide port, to realize the propagation of the microwaves.

In some embodiments, exemplarily, the air frying assembly is disposed at a top portion of the main body, and the microwave assembly is disposed at a bottom portion of the main body.

In the embodiment, the arrangement positions of the air frying assembly and the microwave assembly are defined. In some embodiments, the air frying assembly is disposed at a top portion of the main body, and the microwave assembly is disposed at a bottom portion of the main body. In this way, firstly, the two sides of the food ingredients can be heated respectively by the microwave generating device and the air frying assembly, and this enables the food ingredients to be heated uniformly and improves the cooking effect; secondly, compared with the structure in which the air frying assembly and the microwave assembly are arranged on the side of the main body, the present application arranges the air frying assembly and the microwave assembly at a top portion and bottom portion of the main body respectively, which allows the microwave assembly and the air frying assembly to occupy the same height of mounting space as other components in the cooking chamber assembly without requiring additional mounting space, to make the structure of the cooking chamber assembly more compact and facilitating the miniaturization design of the product.

In some embodiments, exemplarily, the cooking chamber assembly further comprises: a cooling fan arranged at a bottom portion of the main body; and an air duct assembly connected to the cooling fan, which extends along the wall surfaces of the main body to dissipate heat from the a component inside the cooking chamber assembly.

In the embodiment, the structure of the cooking chamber assembly is further defined. It is understandable that when the cooking appliance is in operation, the temperature of the components inside the cooking chamber assembly will rise. To prevent the operation failure of the components due to overheating, the present application disposes in the cooking chamber assembly the cooling fan and the air duct assembly configured to dissipate heat from the components inside the cooking chamber assembly. Wherein, the cooling fan is arranged at a bottom portion of the main body, and the air duct assembly is connected to the cooling fan. The airflow generated by the fan assembly is blown into the air duct assembly and flows along the air duct assembly, to dissipate heat from the components that the air duct assembly passes. The air duct assembly extends along the wall surfaces of the main body, and the extension path of the air duct assembly passes a plurality of components inside the main body. As the air duct assembly contains flowing airflow, the heat of the components that it passes can be taken away through the air duct assembly, to achieve the technical effect of dissipating heat from the components inside the main body by the cooling fan and the air duct assembly.

By arranging the cooling fan and the air duct assembly in the main body, the heat from the components that the air duct assembly passes can be dissipated through the flowing airflow in the air duct assembly, thus preventing the overheating of the components in the main body, ensuring the normal operation of the cooking appliance, and extending the service life of the product.

In some embodiments, exemplarily, the cooking chamber assembly further comprises: an inverter arranged at a bottom portion of the main body; and a control board arranged at a bottom portion of the main body, which is configured to control the operation of the air frying assembly and the microwave assembly. The air duct assembly comprises a first air duct, and the first air duct is connected to the cooling fan and passes the inverter and the control board to dissipate heat from them.

In the embodiment, the structure of the cooking chamber assembly is further defined. The cooking chamber assembly comprises the inverter which is arranged at a bottom portion of the cooking chamber assembly. The cooking appliance to which the cooking chamber assembly is applied is connected to an external power supply, and the inverter regulates the voltage supplied by the power supply, and the regulated voltage can meet the operating requirements of the cooking appliance.

Furthermore, the cooking chamber assembly further comprises the control board, which is arranged at a bottom portion of the main body and configured to control the operation of the air frying assembly and the microwave assembly.

It is understandable that the inverter and the control board generate heat when the cooking appliance is in operation. To prevent the overheating of the control board and the inverter, in the present application the air duct assembly is arranged to pass the inverter and the control board to cool them down. In some embodiments, the air duct assembly comprises the first air duct which is connected to the cooling fan. The airflow generated by the cooling fan enters the first air duct and flows along it, and the first air duct passes the inverter and the control board, and thus heat dissipation and cooling of the inverter and the control board can be conducted.

By arranging the first air duct passing the inverter and the control board in the air duct assembly, heat dissipation and cooling of the inverter and the control board can be achieved through the first air duct, and this prevents the overheating of the inverter and the control board and ensures their normal operation.

In some embodiments, exemplarily, the cooking chamber assembly further comprises: a door assembly movably connected to the main body; and a microswitch connected to the door assembly, the microswitch being configured to open or close the door assembly. The air duct assembly further comprises a second air duct, which is in communication with the first air duct and extends towards the microswitch to dissipate heat from the microswitch.

In the embodiment, the structure of the cooking chamber assembly is further defined. The cooking chamber assembly further comprises the door assembly and the microswitch, wherein the door assembly is movably connected to the main body, and the microswitch is connected to the door assembly and configured to open or close the door assembly, and the door assembly opens or closes the cooking cavity. To dissipate heat from the microswitch and ensure its normal operation, the present application further provides the second air duct in the air duct assembly. The second air duct is in communication with the first air duct and extends towards the microswitch, and the airflow can be guided to the microswitch through the second air duct to achieve heat dissipation for the microswitch.

By arranging the second air duct in the air duct assembly and configuring the second air duct to extend towards the microswitch, heat dissipation for the microswitch can be achieved through the second air duct, to prevent the overheating of the microswitch, then enable the microswitch to operate normally, and improve the reliability of the microswitch.

In some embodiments, exemplarily, the ratio of the cross-sectional area of the first air duct to the cross-sectional area of the second air duct is in a range of 7:3 to 9:1.

In the embodiment, the ratio of the cross-sectional area of the first air duct to the cross-sectional area of the second air duct is defined. In some embodiments, the ratio of the cross-sectional area of the first air duct to the cross-sectional area of the second air duct is in a range of 7:3 to 9:1. In this way, the airflow rates inside the first air duct and the second air duct can be reasonably distributed, and the components can be subjected to heat dissipation sufficiently and then cooled.

In a possible embodiment, the ratio of the cross-sectional area of the first air duct to the cross-sectional area of the second air duct is 8:2.

In some embodiments, exemplarily, the air duct assembly further comprises: a third air duct, which is in communication with an end of the first air duct away from the cooling fan and passes the microwave assembly to dissipate heat from the microwave assembly; and a fourth air duct, which is in communication with the end of the first air duct away from the cooling fan and extends towards the air frying assembly to dissipate heat from the air frying assembly.

In the embodiment, the structure of the air duct assembly is further defined. The air duct assembly further comprises the third air duct and the fourth air duct. Wherein, the third air duct is connected to the end of the first air duct away from the cooling fan, and part of the airflow in the first air duct flows into the third air duct. The third air duct passes the microwave assembly, thus enabling heat dissipation for the microwave assembly through the airflow in the third air duct to prevent the overheating of the microwave assembly. The fourth air duct is connected to the end of the first air duct away from the cooling fan, and part of the airflow in the first air duct flows into the fourth air duct. The fourth air duct extends towards the air frying assembly, to guide the airflow to the air frying assembly through the fourth air duct to dissipate heat from the air frying assembly and avoid its overheating.

By arranging the third air duct and the fourth air duct in the air duct assembly, heat dissipation for the microwave assembly and the air frying assembly can be achieved through the third air duct and the fourth air duct respectively, to prevent the overheating of the microwave assembly and the air frying assembly, ensure the normal operation of the microwave assembly and the air frying assembly, and improve the reliability of the microwave assembly and the air frying assembly.

In some embodiments, exemplarily, the ratio of the cross-sectional area of the third air duct to the cross-sectional area of the fourth air duct is in a range of 6:4 to 8:2.

In the embodiment, the ratio of the cross-sectional area of the third air duct to the cross-sectional area of the fourth air duct is defined. In some embodiments, the ratio of the cross-sectional area of the third air duct to the cross-sectional area of the fourth air duct is in a range of 6:4 to 8:2. In this way, the airflow rates inside the third air duct and the fourth air duct can be reasonably distributed, and both the microwave assembly and the air frying assembly can be subjected to heat dissipation sufficiently and then cooled.

In a possible embodiment, the ratio of the cross-sectional area of the third air duct to the cross-sectional area of the fourth air duct is 7:3.

The second aspect of the present application further provides a cooking appliance, which comprises the cooking chamber assembly provided in the first aspect of the present application.

As the cooking appliance provided in the second aspect of the present application comprises the cooking chamber assembly provided in the first aspect of the present application, it has all the beneficial effects of the cooking chamber assembly.

The cooking appliance comprises a microwave-air fryer combination appliance.

The additional aspects and advantages of the present application will become apparent in the following description or may be learned through practice of the present application.

### BRIEF DESCRIPTION OF THE DRAWINGS

The above-mentioned and/or additional aspects and advantages of the present application will become apparent and easily understandable from the description of the embodiments in combination with the following accompanying drawings, wherein:
FIG. 1 shows a first schematic view of the structure of a cooking chamber assembly according to an embodiment of the present application;
FIG.2 shows a second schematic view of the structure of a cooking chamber assembly according to an embodiment of the present application;
FIG.3 shows a third schematic view of the structure of a cooking chamber assembly according to an embodiment of the present application;
FIG.4 shows a fourth schematic view of the structure of a cooking chamber assembly according to an embodiment of the present application;
FIG.5 shows a fifth schematic view of the structure of a cooking chamber assembly according to an embodiment of the present application;
FIG.6 shows a sixth schematic view of the structure of a cooking chamber assembly according to an embodiment of the present application;
FIG.7 shows a seventh schematic view of the structure of a cooking chamber assembly according to an embodiment of the present application;
FIG.8 shows an eighth schematic view of the structure of a cooking chamber assembly according to an embodiment of the present application;
FIG.9 shows a ninth schematic view of the structure of a cooking chamber assembly according to an embodiment of the present application;
FIG. 10 shows a tenth schematic view of the structure of a cooking chamber assembly according to an embodiment of the present application;
FIG. 11 shows an eleventh schematic view of the structure of a cooking chamber assembly according to an embodiment of the present application;
FIG. 12 shows a twelfth schematic view of the structure of a cooking chamber assembly according to an embodiment of the present application;
FIG. 13 shows effect of performing microwave heating on food ingredients by a microwave assembly according to an embodiment of the present application; and
FIG. 14 shows a schematic view of airflow directions in a first air duct and a third air duct of an air frying assembly according to an embodiment of the present application.

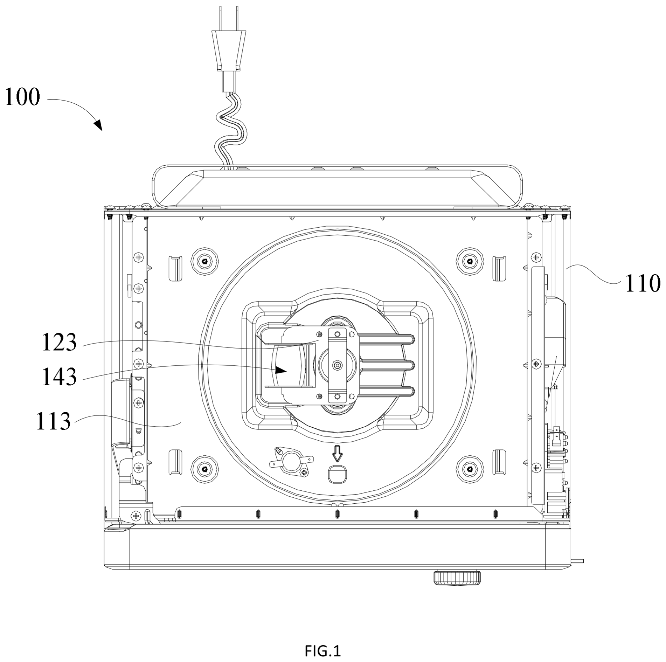

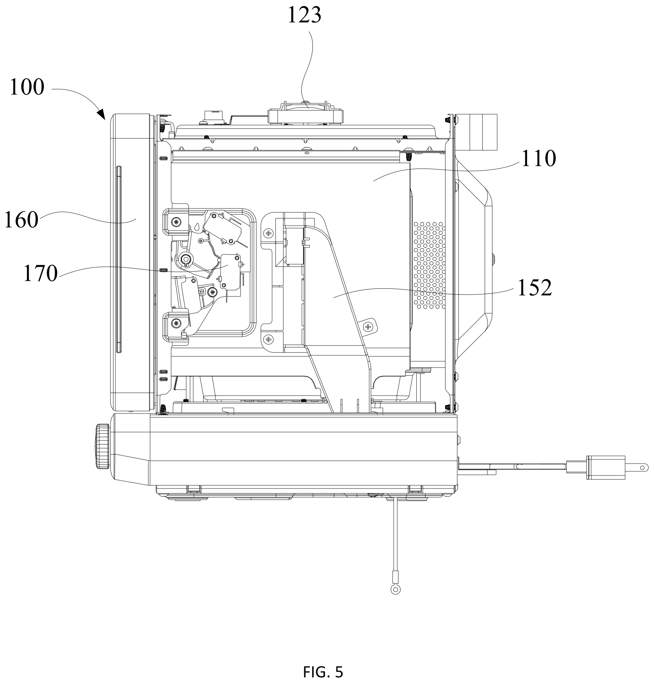

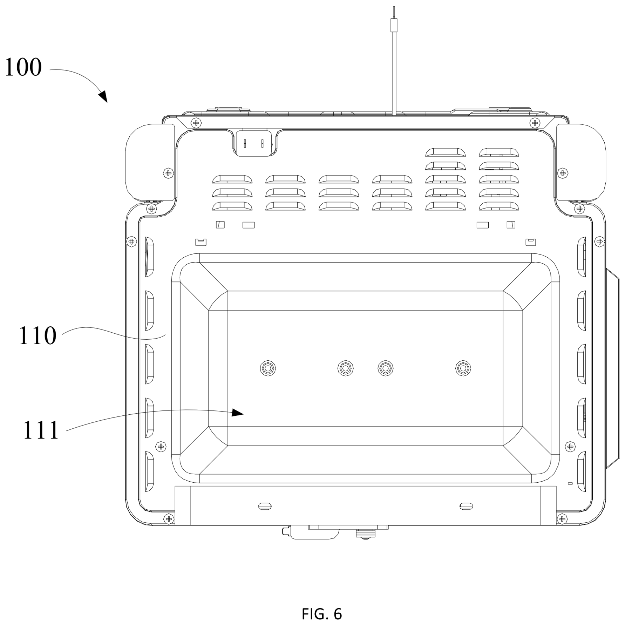

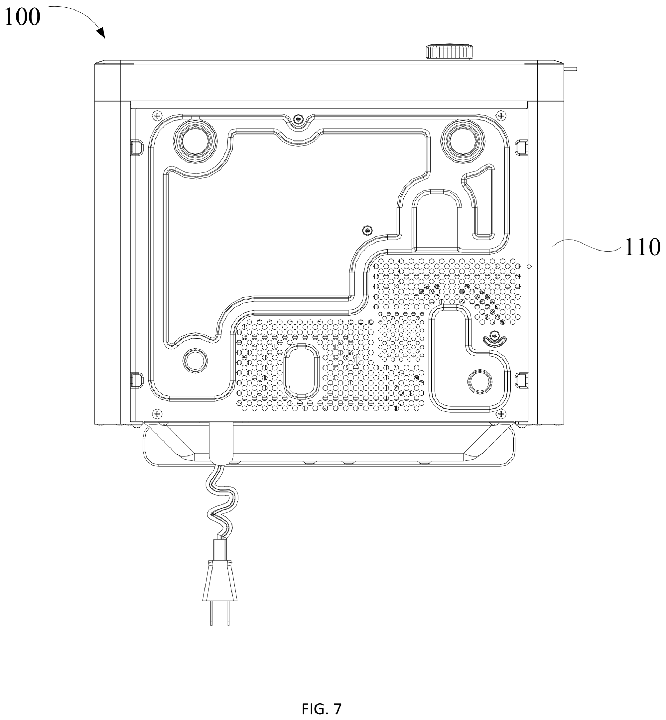

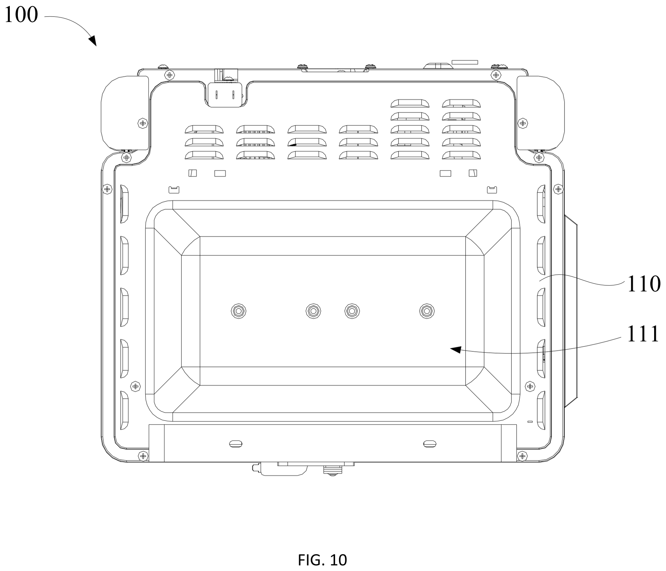

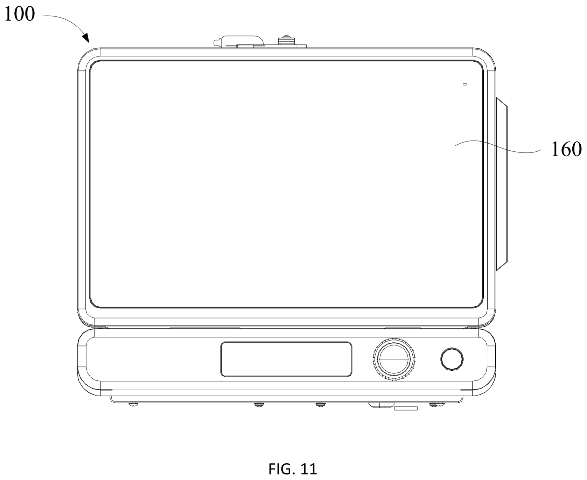

Wherein, the corresponding relationships between the reference signs and the component names in FIG. 1 to FIG.12 and FIG. 14 are as follows:
100 cooking chamber assembly, 110 main body, 111 cooking cavity, 112 first top plate, 113 second top plate, 114 air distribution plate, 115 air outlet, 120 air frying assembly, 121 fan assembly, 122 heating assembly, 123 drive motor, 124 fan blade, 130 microwave assembly, 131 microwave generating device, 132 waveguide plate, 133 waveguide cavity, 134 feeding port, 135 waveguide port, 136 waveguide assembly, 140 accommodating recess, 141 first accommodating recess, 142 second accommodating recess, 143 third accommodating recess, 150 air duct assembly, 151 first air duct, 152 second air duct, 153 fourth air duct, 160 door body assembly, 170 microswitch, 180 control board bracket, 181 cooling fan bracket, 182 heat dissipation motor.

### DETAILED DESCRIPTION

To more clearly understand the above purposes, features and advantages of the present application, the present application will be further detailed hereinafter in combination with the accompanying drawings and embodiments. It should be noted that in the case of no conflict, the embodiments and the features in the embodiments of the present application can be combined with each other.

Many details are illustrated in the following description for the convenience of a thorough understanding to the present application, but the embodiments of the present application can further be implemented using other embodiments other than these described herein. Therefore, the protection scope of the present application is not limited to the specific embodiments disclosed in the following text.

A cooking chamber assembly 100 and a cooking appliance according to some embodiments of the present application are described hereinafter by referring to FIG. 1 to FIG. 14.

In an embodiment of the present application, as shown in FIG. 1, FIG. 2, FIG. 6, FIG. 8 and FIG. 10, the first aspect of the present application provides a cooking chamber assembly 100, comprising: a main body 110, comprising a cooking cavity 111; an air frying assembly 120, configured to blow hot air into the cooking cavity 111, wherein a wall surface of the main body 110 is provided with a plurality of accommodating recesses 140, at least part of the accommodating recesses 140 are recessed in a direction towards the cooking cavity 111, and at least part of the air frying assembly 120 is disposed in the accommodating recesses 140 recessed towards the cooking cavity 111.

The cooking chamber assembly100 provided in the present application can be applied to a cooking appliance. The cooking chamber assembly 100 comprises the main body 110, and the main body 110 comprises the cooking cavity 111 for accommodating food ingredients. When the cooking appliance is in operation, the cooking appliance cooks the food ingredients placed inside the cooking cavity 111.

Furthermore, the cooking chamber assembly 100 comprises the air frying assembly 120, and the air frying assembly 120 can cook the food ingredients in the cooking cavity 111 in an air frying manner. In some embodiments, in the case that the air frying assembly 120 is in operation, it can blow hot air into the cooking cavity 111, and the food ingredients in the cooking cavity 111 can be heated by the hot air to achieve a cooking effect of air frying. The air frying assembly 120 is composed of a plurality of components, resulting in a certain thickness of the air frying assembly 120. To reduce the height of the air frying assembly 120 projecting from the outer wall of the main body 110, the present application provides a plurality of accommodating recesses 140in the wall surfaces of the main body 110. By arranging at least part of the air frying assembly 120 in the accommodating recesses 140, the height of the air frying assembly 120projecting from the wall surfaces of the main body 110 can be reduced. In some embodiments, the wall surfaces of the main body 110are provided with a plurality of accommodating recesses 140, and at least one of the accommodating recesses 140 are recessed towards the cooking cavity 111, that is, the recess walls of the accommodating recesses 140 extend into the cooking cavity 111, and at least part of the air frying assembly 120 is disposed in the accommodating recesses 140 recessed towards the cooking cavity 111. In this way, by allowing the air frying assembly 120 to occupy part of the space of the cooking cavity 111, the height of the air frying assembly 120projecting from the wall surfaces of the main body 110 can be reduced, to reduce the distance between a housing of the cooking appliance and the wall surfaces of the cooking chamber assembly 100, then enabling the cooking appliance to have a narrow bezel and reducing the size of the cooking appliance. The bezel of the cooking appliance to which the cooking chamber assembly 100 is applied in the present application can be narrowed to 30 mm.

Furthermore, the various components of the air frying assembly 120employ a nested configuration, and thus the height of the air frying assembly 120 can be reduced. By using the structure of the nested configuration, the height of the air frying assembly 120 can be reduced to 50 mm, further decreasing the size of the cooking appliance to which the cooking chamber assembly 100 is applied.

A wall surface of the main body 110 is provided with the accommodating recesses 140 recessed in a direction towards the cooking cavity 111, and at least part of the air frying assembly 120 is disposed in the accommodating recesses 140, and the height of the air frying assembly 120 projecting from the wall surfaces of the main body 110 can be decreased, to decrease the distance between the housing of a cooking appliance and the wall surfaces of the cooking chamber assembly 100, enabling the cooking appliance to have a narrow bezel, reducing the size of the cooking appliance, making the structure of the cooking appliance more compact, and facilitating miniaturization design of the product.

In some embodiments, exemplarily, as shown in FIG. 1, FIG. 2, FIG. 8 and FIG. 9, the air frying assembly 120 comprises: a fan assembly 121 configured to generate airflow; and a heating assembly 122 configured to heat the airflow generated by the fan assembly 121 to form hot air. The main body 110 comprises a first top plate 112 forming the top wall of the cooking cavity 111. The plurality of accommodating recesses 140 comprise a first accommodating recess141 and a second accommodating recess 142, which are arranged in the first top plate 112. The first accommodating recess 141 is recessed towards the cooking cavity 111, and the second accommodating recess 142 protrudes away from the cooking cavity 111. At least part of the fan assembly 121 is disposed in the first accommodating recess 141, and at least part of the heating assembly 122 is disposed in the second accommodating recess 142.

In the embodiment, the structure of the air frying assembly 120 is defined. The air frying assembly 120comprises the fan assembly 121 and the heating assembly 122, wherein the fan assembly 121 is configured to generate airflow, and the heating assembly 122 is configured to generate heat. In the case that the heating assembly 122 is in operation, it heats the airflow generated by the fan assembly 121 to form hot air. The fan assembly 121 can blow the hot air generated by the heating of the heating assembly 122 into the cooking cavity 111, to perform air frying on the food ingredients inside the cooking cavity 111.

In a possible embodiment, the heating assembly 122 is a heating tube, and the heating assembly 122 is disposed at the side of the fan assembly 121 facing the cooking cavity 111, to facilitate heating the airflow generated by the fan assembly 121 through the heating assembly 122.

Furthermore, in order to be able to reduce the height of the air frying assembly 120projecting from the wall surfaces of the main body 110, the present application provides the first top plate 112 with a plurality of accommodating recesses 140 in the main body 110. By mounting at least part of the air frying assembly 120 in the accommodating recesses 140, the height of the air frying assembly 120projecting from the wall surfaces of the main body 110 is reduced.

In some embodiments, the main body 110 comprises the first top plate 112 forming the top wall of the cooking cavity 111. The plurality of accommodating recesses 140 comprise the first accommodating recess 141 and the second accommodating recess 142, and the first accommodating recess 141 and the second accommodating recess 142 are both disposed in the first top plate 112, wherein, the first accommodating recess 141 is recessed towards the cooking cavity 111, and the second accommodating recess 142 protrudes away from the cooking cavity 111, that is, the notch of the first accommodating recess 141 faces the outside, and the notch of the second accommodating recess 142 faces the inside of the cooking cavity 111. The air frying assembly 120 is disposed at a top portion of the main body 110, and comprises the fan assembly 121 and the heating assembly 122, wherein at least part of the fan assembly 121 is disposed in the first accommodating recess 141, and at least part of the heating assembly 122 is disposed in the second accommodating recess 142. In this way, firstly, the height of the fan assembly 121projecting from the first top plate 112 can be reduced, thus achieving the technical effect of a narrow bezel for the cooking appliance; secondly, the space of the cooking cavity 111 occupied by the heating assembly 122 can be reduced. Moreover, since the opening of the second accommodating recess 142 faces the inside of the cooking cavity 111, more heat generated by the heating assembly 122is dissipated into the cooking cavity 111, thus improving the heating efficiency.

Furthermore, the first top plate 112 is provided with an opening communicating with the cooking cavity 111. In the case that the air frying assembly 120 is in operation, the fan assembly 121 generates an airflow, which is blown into the cooking cavity 111 through the opening of the first top plate 112. The heating assembly 122 generates heat to heat the airflow generated by the fan assembly 121, thus forming hot air. In this way, the food ingredients in the cooking cavity 111 can be heated by the hot air to achieve the cooking effect of air frying.

By arranging in the first top plate 112the first accommodating recess 141 recessed towards the cooking cavity 111 and the second accommodating recess 142 protruding away from the cooking cavity 111, and mounting at least part of the fan assembly 121 in the first accommodating recess 141 and mounting the heating assembly 122 in the second accommodating recess 142, firstly, the height of the fan assembly 121projecting from the first top plate 112 can be reduced, thus achieving the technical effect of a narrow bezel for the cooking appliance; and secondly, the space of the cooking cavity 111 occupied by the heating assembly 122 can be reduced, to improve the utilization rate of the space of the cooking cavity 111.

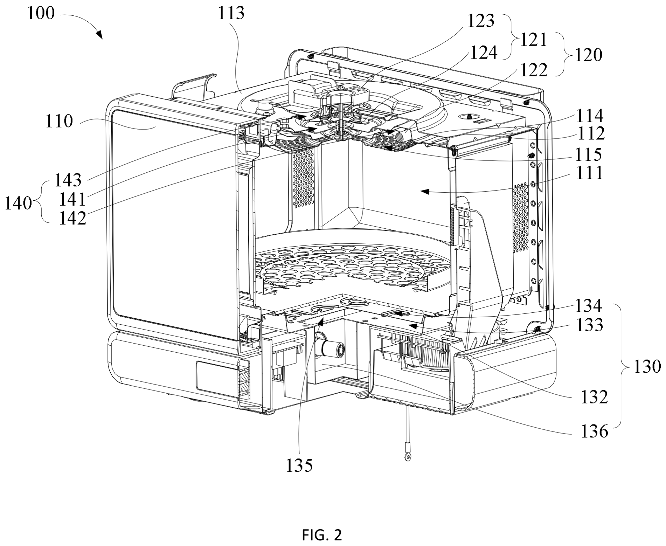

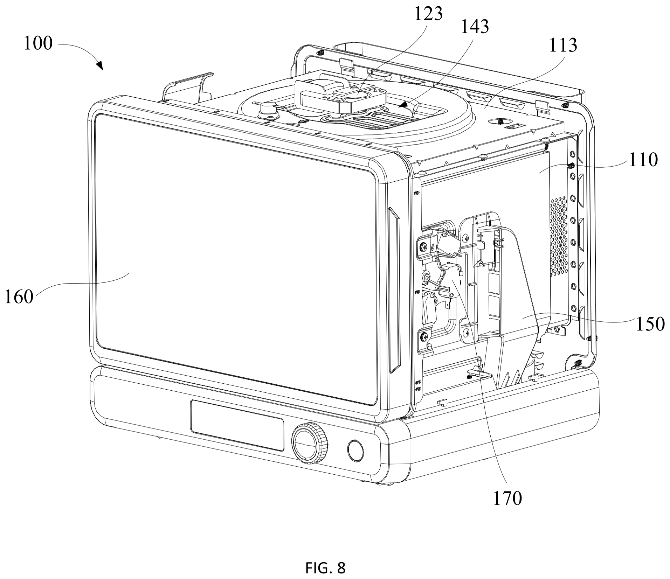

In some embodiments, exemplarily, as shown in FIG. 2 and FIG. 8, the fan assembly 121 comprises: a drive motor 123; and a plurality of fan blades 124connected to the drive motor 123, wherein, the drive motor 123 is configured to drive the plurality of fan blades 124 to rotate and then to generate airflow. The main body 110 further comprises a second top plate 113, which is disposed at the side of the first top plate 112 away from the cooking cavity 111. The second top plate 113 is provided with a third accommodating recess 143 recessed towards the cooking cavity 111. At least part of the drive motor 123 is disposed in the third accommodating recess 143, and at least part of the fan blades 124isdisposed in the first accommodating recess 141.

In the embodiment, the structure of the fan assembly 121 is defined. The fan assembly 121 comprises the drive motor 123 and a plurality of fan blades 124 which are connected to the drive motor 123. In the case that the fan assembly 121 is in operation, the drive motor 123 drives the plurality of fan blades 124 to rotate and then to generate airflow. Wherein, the plurality of fan blades 124 are disposed at the side of the drive motor 123 facing the cooking cavity 111.

Furthermore, to be able to reduce the height of the fan assembly 121projecting from the wall surfaces of the main body 110, the present application further provides the second top plate 113 with the third accommodating recess 143 in the main body 110, to reduce the height of the fan assembly 121projecting from the wall surfaces of the main body 110.

In some embodiments, the second top plate 113 is disposed at the side of the first top plate 112 away from the cooking cavity 111, and the second top plate 113 is provided with the third accommodating recess 143 which is recessed towards the cooking cavity 111. At least part of the drive motor 123 is disposed in the third accommodating recess 143, and at least part of the fan blades 124 are disposed in the first accommodating recess 141. In this way, firstly, the height of the fan assembly 121projecting from the wall surfaces of the main body 110 can be reduced, thus achieving the technical effect of a narrow bezel for the cooking appliance; secondly, the second top plate 113 can separate the drive motor 123 from the cooking cavity 111, and this reduces the impact of the high temperature inside the cooking cavity 111 on the drive motor 123 and extends the service life of the drive motor 123.

By arranging the second top plate 113 in the main body 110 and mounting the drive motor 123 in the third accommodating recess 143 recessed towards the cooking cavity 111, the height of the drive motor 123projecting from the wall surfaces of the main body 110 can be reduced, to reduce the height of the fan assembly 121projecting from the wall surfaces of the main body 110, which is conducive to achieving the technical effect of a narrow bezel for the cooking appliance.

In some embodiments, exemplarily, as shown in FIG. 2, the cooking chamber assembly100 further comprises an air distribution plate 114, which is arranged at the side of the fan assembly 121 facing the cooking cavity 111. The air distribution plate 114 is provided with a plurality of air outlets 115, which are configured to discharge the airflow generated by the fan assembly 121 into the cooking cavity 111.

In the embodiment, the structure of the cooking chamber assembly 100 is further defined. To allow the hot air to be uniformly discharged into the cooking cavity 111, the present application further provides the air distribution plate 114 for discharging air in the cooking chamber assembly 100. The air distribution plate 114 is arranged at the side of the fan assembly 121 facing the cooking cavity 111, and is provided with a plurality of air outlets 115, and the hot air can be discharged into the cooking cavity 111 through the plurality of air outlets 115. The plurality of air outlets 115 are evenly distributed in the air distribution plate 114, and the flow direction of the hot air can be adjusted through the evenly distributed air outlets 115, and this enables the hot air to be uniformly discharged into the cooking cavity 111.

Furthermore, there is a certain distance between the air distribution plate 114 and the first top plate 112. In this way, the hot air can first flow between the first top plate 112 and the air distribution plate 114, and this allows the hot air to fully flow to the positions of the plurality of air outlets 115, and then the hot air is discharged into the cooking cavity 111 through the plurality of air outlets 115, and the hot air can be blown into the cooking cavity 111 more uniformly.

By arranging the air distribution plate 114at the side of the fan assembly 121 facing the cooking cavity 111 and providing a plurality of air outlets 115in the air distribution plate 114, the hot air can be discharged into the cooking cavity 111 through the plurality of air outlets 115, to enable the hot air to be evenly discharged into the cooking cavity 111, allowing the food ingredients to be heated uniformly and improving the cooking effect.

In some embodiments, exemplarily, as shown in FIG. 2, the cooking chamber assembly 100 further comprises a microwave assembly 130, which is disposed at the side of the main body 110 away from the air frying assembly 120. A plurality of feeding ports 134 are provided in the side of the microwave assembly 130 facing the cooking cavity 111, and the microwave assembly 130 radiates microwaves into the cooking cavity 111 through the feeding ports 134.

In the embodiment, the structure of the cooking chamber assembly 100 is further defined. To enable the cooking appliance to have a plurality of cooking modes and meet the diverse needs of users, the present application further disposes the microwave assembly 130 in the cooking chamber assembly 100. The microwave assembly 130 can perform microwave heating on the food ingredients inside the cooking cavity 111. The microwave assembly 130 and the air frying assembly 120 can operate independently or operate simultaneously. In this way, the cooking appliance can be equipped with a plurality of cooking modes to satisfy different needs of users and enhance the use convenience for users.

Furthermore, the microwave assembly 130 is disposed at the side of the main body 110 away from the air frying assembly 120. In this way, when the microwave assembly 130 and the air frying assembly 120 operate simultaneously, two sides of the food ingredients can be heated at the same time, to improve the cooking effect. In addition, arranging the microwave assembly 130at the side of the main body 110 away from the air frying assembly 120 can make the structure of the cooking chamber assembly 100 more compact, which is conducive to the miniaturization design of the product. In a possible embodiment, the microwave assembly 130 is disposed at a bottom portion of the main body 110, and the air frying assembly 120 is disposed at a top portion of the main body 110.

Furthermore, the structure of the microwave assembly 130 is defined. The plurality of feeding ports 134 are arranged in the side of the microwave assembly 130 facing the cooking cavity 111, and the microwave assembly 130 can radiate microwaves into the cooking cavity 111 through the plurality of feeding ports 134. Compared with a traditional structure that transmits microwaves into the cooking cavity 111 by a stirrer, the present application radiates microwaves into the cooking cavity 111 through a plurality of feeding ports 134, which not only achieves uniform microwave radiation into the cooking cavity 111, but also reduces the space occupied by the microwave assembly 130, to reduce the volume of the cooking chamber assembly 100, making the structure of the cooking chamber assembly 100 more compact and facilitating the miniaturization design of the product. The plurality of feeding ports 134 radiate microwaves into the cooking cavity 111 respectively, and the microwaves radiated by the plurality of feeding ports 134 are mutually superimposed, to balance the microwave field distribution in each area of the cooking cavity 111and heat the food ingredients uniformly. The bottom wall of the cooking cavity 111 is made of glass that can transmit microwaves, and the feeding ports 134 can radiate microwaves into the cooking cavity 111 through the bottom wall of the cooking cavity 111.

By arranging the microwave assembly 130 in the cooking chamber assembly 100, the cooking appliance can have a cooking mode of microwave heating, to meet a plurality of cooking needs of users and improve the use convenience for users. By arranging the plurality of feeding ports 134 in the microwave assembly 130 and radiating microwaves into the cooking cavity 111 through the plurality of feeding ports 134, firstly, the microwaves radiated by the plurality of feeding ports 134 can be mutually superimposed, to balance the microwave field distribution in each area of the cooking cavity 111and heat the food ingredients uniformly; secondly, a stirring device can be omitted, which reduces the space occupied by the microwave assembly 130, to reduce the size of the cooking chamber assembly 100, making the structure of the cooking chamber assembly 100 more compact and facilitating the miniaturization design of the product.

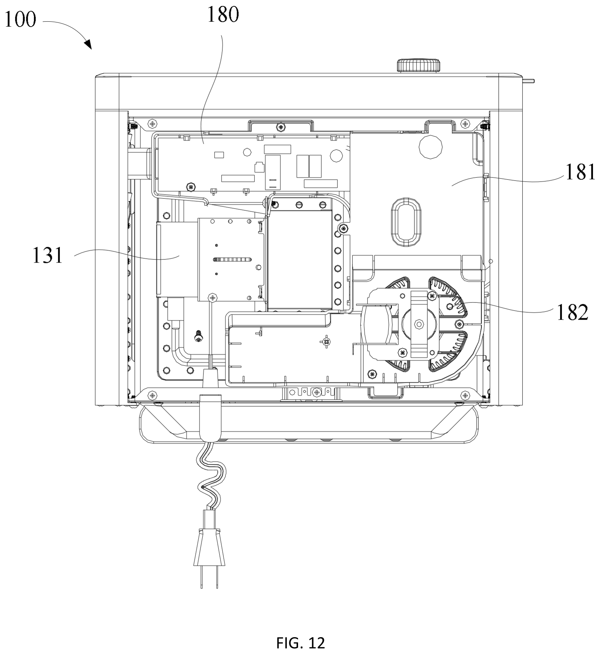

In some embodiments, exemplarily, as shown in FIG. 2 and FIG. 12, the microwave assembly 130 comprises: a microwave generating device 131 configured to generate microwaves; and a plurality of waveguide plates 132defininga waveguide cavity 133. The microwave generating device 131 is in communication with the waveguide cavity 133, and the plurality of feeding ports 134 are arranged in the top wall of the waveguide cavity 133.

In the embodiment, the structure of the microwave assembly 130 is defined. The microwave assembly 130 comprises the microwave generating device 131 and the plurality of waveguide plates 132, wherein the microwave generating device 131 is configured to generate microwaves, and the plurality of waveguide plates 132 enclose the waveguide cavity 133 for transmitting microwaves. In some embodiments, the waveguide cavity 133 is in communication with the microwave generating device 131. The microwaves generated by the microwave generating device 131 first enter the waveguide cavity 133 and propagate along the direction towards the cooking cavity 111 inside the waveguide cavity 133. The plurality of feeding ports 134 are arranged in the top wall of the waveguide cavity 133, and the microwaves are fed into the cooking cavity 111 through the plurality of feeding ports 134 to realize the propagation of microwaves.

By arranging the microwave generating device 131 and the plurality of waveguide plates 132 in the microwave assembly 130, the microwaves generated by the microwave generating device 131 can be transmitted into the cooking cavity 111 through the waveguide cavity 133 enclosed by the plurality of waveguide plates 132, thus realizing the propagation of the microwaves.

In some embodiments, exemplarily, as shown in FIG. 2, the cooking chamber assembly100 further comprises a waveguide port 135, which is arranged in the bottom wall of the waveguide cavity 133 and serves to communicate the waveguide cavity 133 with the microwave generating device 131.

In the embodiment, the structure of the cooking chamber assembly 100 is further defined. To transmit the microwaves generated by the microwave generating device 131 into the waveguide cavity 133, the present application further provides the waveguide port 135in the bottom wall of the waveguide cavity 133. The waveguide port 135 can communicate the microwave generating device 131 with the waveguide cavity 133, and the microwaves generated by the microwave generating device 131 can be transmitted into the waveguide cavity 133 through the waveguide port 135, to realize the propagation of the microwaves.

By providing the waveguide port 135in the bottom wall of the waveguide cavity 133 that communicates with the microwave generating device 131, the microwaves generated by the microwave generating device 131 can be transmitted into the waveguide cavity 133 through the waveguide port 135, to realize the propagation of the microwaves.

In some embodiments, exemplarily, as shown in FIG. 1, FIG. 2 and FIG. 8, the air frying assembly 120 is disposed at a top portion of the main body 110, and the microwave assembly 130 is disposed at a bottom portion of the main body 110.

In the embodiment, the arrangement positions of the air frying assembly 120 and the microwave assembly 130 are defined. In some embodiments, the air frying assembly 120 is disposed at a top portion of the main body 110, and the microwave assembly 130 is disposed at a bottom portion of the main body 110. In this way, firstly, the two sides of the food ingredients can be heated respectively by the microwave generating device 131 and the air frying assembly 120, and this enables the food ingredients to be heated uniformly and improves the cooking effect; secondly, compared with the structure in which the air frying assembly 120 and the microwave assembly 130 are arranged on the side of the main body 110, the present application arranges the air frying assembly 120 and the microwave assembly 130 at a top portion and bottom portion of the main body 110 respectively, which allows the microwave assembly 130 and the air frying assembly 120 to occupy the same height of mounting space as other components in the cooking chamber assembly 100 without requiring additional mounting space, to make the structure of the cooking chamber assembly 100 more compact and facilitating the miniaturization design of the product.

In some embodiments, exemplarily, as shown in FIG. 8 and FIG. 12, the cooking chamber assembly 100 further comprises: a cooling fan arranged at a bottom portion of the main body 110; and an air duct assembly 150connected to the cooling fan, which extends along the wall surfaces of the main body 110 to dissipate heat from the components inside the cooking chamber assembly 100.

In the embodiment, the structure of the cooking chamber assembly 100 is further defined. It is understandable that when the cooking appliance is in operation, the temperature of the components inside the cooking chamber assembly 100 will rise. To prevent the operation failure of the components due to overheating, the present application disposes in the cooking chamber assembly 100 the cooling fan and the air duct assembly 150 for dissipating heat from the components inside the cooking chamber assembly 100. Wherein, the cooling fan is arranged at a bottom portion of the main body 110, and the air duct assembly 150 is connected to the cooling fan. The airflow generated by the fan assembly 121 is blown into the air duct assembly 150 and flows along the air duct assembly 150, to dissipate heat from the components that the air duct assembly 150 passes. The cooking chamber assembly 100 further comprises a heat dissipation motor 182 for driving the cooling fan, and the heat dissipation motor 182 can drive the cooling fan to rotate to generate airflow. The cooking chamber assembly 100 further comprises a cooling fan bracket 181 for supporting the cooling fan. The air duct assembly 150 extends along the wall surfaces of the main body 110, and the extension path of the air duct assembly 150 passes a plurality of components inside the main body 110. As the air duct assembly 150 contains flowing airflow, the heat of the components that it passes can be taken away through the air duct assembly 150, to achieve the technical effect of dissipating heat from the components inside the main body 110 by the cooling fan and the air duct assembly 150.

By arranging the cooling fan and the air duct assembly 150 in the main body 110, the heat from the components that the air duct assembly 150 passes can be dissipated through the flowing airflow in the air duct assembly 150, thus preventing the overheating of the components in the main body 110, ensuring the normal operation of the cooking appliance, and extending the service life of the product.

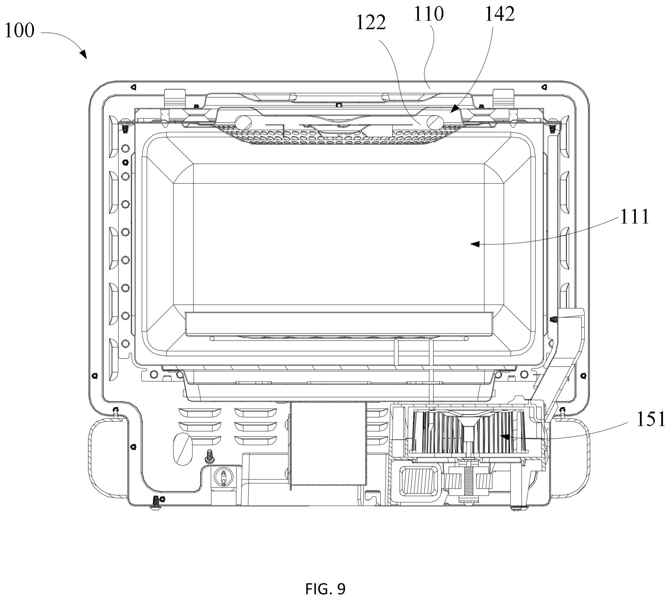

In some embodiments, exemplarily, as shown in FIG. 9, FIG. 12 and FIG. 14, the cooking chamber assembly 100 further comprises: an inverter arranged at a bottom portion of the main body 110; and a control board arranged at a bottom portion of the main body 110, which is configured to control the operation of the air frying assembly 120 and the microwave assembly 130. The air duct assembly 150 comprises a first air duct 151, and the first air duct 151 is connected to the cooling fan and passes the inverter and the control board to dissipate heat from them.

In the embodiment, the structure of the cooking chamber assembly 100 is further defined. The cooking chamber assembly 100 comprises the inverter which is arranged at a bottom portion of the cooking chamber assembly 100. The cooking appliance to which the cooking chamber assembly 100 is applied is connected to an external power supply, and the inverter regulates the voltage supplied by the power supply, and the regulated voltage can meet the operating requirements of the cooking appliance.

Furthermore, the cooking chamber assembly 100 further comprises the control board, which is arranged at a bottom portion of the main body 110 and configured to control the operation of the air frying assembly 120 and the microwave assembly 130.The cooking chamber assembly 100 further comprises a control board bracket 180 for supporting the control board, and the control board is mounted on the control board bracket 180.

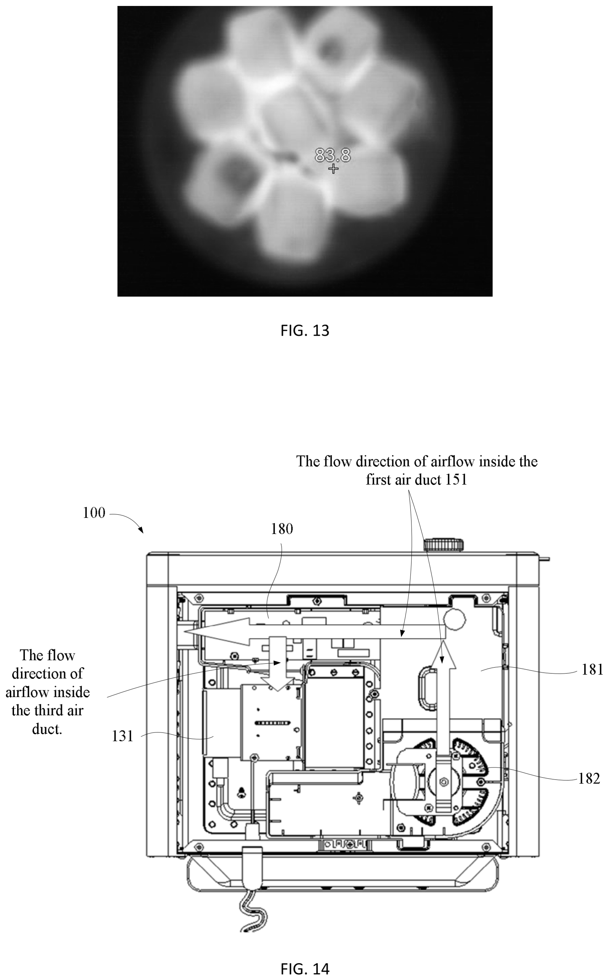

It is understandable that the inverter and the control board generate heat when the cooking appliance is in operation. To prevent the overheating of the control board and the inverter, in the present application the air duct assembly 150 is arranged to pass the inverter and the control board to cool them down. In some embodiments, the air duct assembly 150 comprises the first air duct 151 which is connected to the cooling fan. The airflow generated by the cooling fan enters the first air duct 151 and flows along it, and the first air duct 151 passes the inverter and the control board, and thus heat dissipation and cooling of the inverter and the control board can be conducted. Wherein, the flow direction of airflow inside the first air duct 151 is shown in FIG. 14.

By arranging the first air duct 151 passing the inverter and the control board in the air duct assembly 150, heat dissipation and cooling of the inverter and the control board can be achieved through the first air duct 151, and this prevents the overheating of the inverter and the control board and ensures their normal operation.

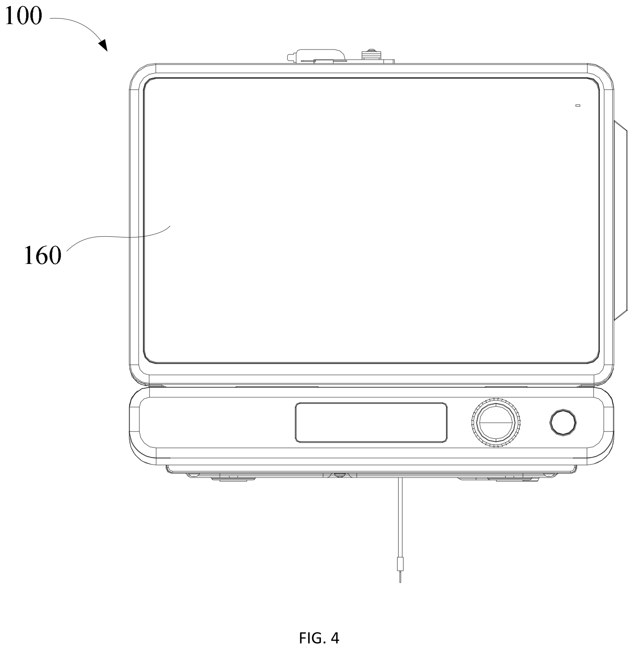

In some embodiments, exemplarily, as shown in FIG. 4, FIG. 5, FIG. 7, FIG. 8 and FIG. 11, the cooking chamber assembly 100 further comprises: a door assembly 160 movably connected to the main body 110; and a microswitch 170connected to the door assembly 160, wherein the microswitch 170 is configured to open or close the door assembly 160. The air duct assembly 150 further comprises a second air duct 152, which is in communication with the first air duct 151 and extends towards the microswitch170 to dissipate heat from the microswitch 170.

In the embodiment, the structure of the cooking chamber assembly 100 is further defined. The cooking chamber assembly 100 further comprises the door assembly 160 and the microswitch 170, wherein the door assembly 160 is movably connected to the main body 110, and the microswitch170 is connected to the door assembly 160 and configured to open or close the door assembly 160, and the door assembly 160 opens or closes the cooking cavity 111. To dissipate heat from the microswitch 170 and ensure its normal operation, the present application further provides the second air duct 152 in the air duct assembly 150. The second air duct 152 is in communication with the first air duct 151 and extends towards the microswitch 170, and the airflow can be guided to the microswitch 170 through the second air duct 152 to achieve heat dissipation for the microswitch 170.

By arranging the second air duct 152 in the air duct assembly 150 and configuring the second air duct 152 to extend towards the microswitch 170, heat dissipation for the microswitch170 can be achieved through the second air duct 152, to prevent the overheating of the microswitch 170, then enable the microswitch 170 to operate normally, and improve the reliability of the microswitch 170.

In some embodiments, exemplarily, the ratio of the cross-sectional area of the first air duct 151 to that of the second air duct 152is in a range of 7:3 to 9:1.

In the embodiment, the ratio of the cross-sectional area of the first air duct 151 to that of the second air duct 152 is defined. In some embodiments, the ratio of the cross-sectional area of the first air duct 151 to that of the second air duct 152 is in a range of 7:3 to 9:1. In this way, the airflow rates inside the first air duct 151 and the second air duct 152 can be reasonably distributed, and the components can be subjected to heat dissipation sufficiently and then cooled.

In a possible embodiment, the ratio of the cross-sectional area of the first air duct 151 to that of the second air duct 152 is 8:2.

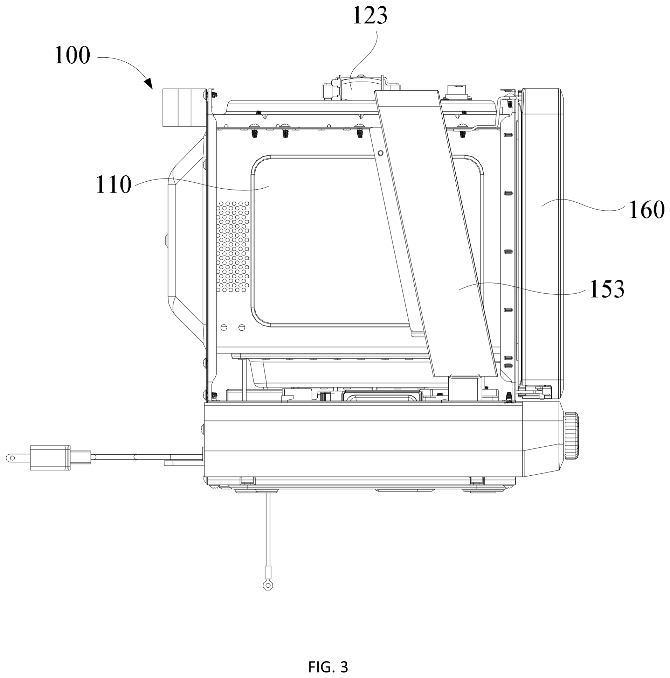

In some embodiments, exemplarily, as shown in FIG. 3 and FIG. 14, the air duct assembly 150 further comprises: a third air duct, which is connected to an end of the first air duct 151 away from the cooling fan and passes the microwave assembly 130 to dissipate heat from the microwave assembly 130; and a fourth air duct 153, which is connected to the end of the first air duct 151 away from the cooling fan and extends towards the air frying assembly 120 to dissipate heat from the air frying assembly 120.

In the embodiment, the structure of the air duct assembly 150 is further defined. The air duct assembly 150 further comprises the third air duct and the fourth air duct 153. Wherein, the third air duct is connected to the end of the first air duct 151 away from the cooling fan, and part of the airflow in the first air duct 151 flows into the third air duct. The third air duct passes the microwave assembly 130, thus enabling heat dissipation for the microwave assembly 130 through the airflow in the third air duct to prevent the overheating of the microwave assembly 130, wherein, the flow direction of airflow inside the third air duct is shown in FIG. 14. The fourth air duct 153 is connected to the end of the first air duct 151 away from the cooling fan, and part of the airflow in the first air duct 151 flows into the fourth air duct 153. The fourth air duct 153 extends towards the air frying assembly 120, to guide the airflow to the air frying assembly 120 through the fourth air duct 153 to dissipate heat from the air frying assembly 120 and avoid its overheating.

By arranging the third air duct and the fourth air duct 153 in the air duct assembly 150, heat dissipation for the microwave assembly 130 and the air frying assembly 120 can be achieved through the third air duct and the fourth air duct 153 respectively, to prevent the overheating of the microwave assembly 130 and the air frying assembly 120, ensure the normal operation of the microwave assembly 130 and the air frying assembly 120, and improve the reliability of the microwave assembly 130 and the air frying assembly 120.

In some embodiments, exemplarily, the ratio of the cross-sectional area of the third air duct to that of the fourth air duct 153is in a range of 6:4 to 8:2.

In the embodiment, the ratio of the cross-sectional area of the third air duct to that of the fourth air duct 153 is defined. In some embodiments, the ratio of the cross-sectional area of the third air duct to that of the fourth air duct 153is in a range of 6:4 to 8:2. In this way, the airflow rates inside the third air duct and the fourth air duct 153 can be reasonably distributed, and both the microwave assembly 130 and the air frying assembly 120 can be subjected to heat dissipation sufficiently and then cooled.

In a possible embodiment, the ratio of the cross-sectional area of the third air duct to that of the fourth air duct 153 is 7:3.

In a possible embodiment, the air frying assembly 120 is mounted at a top portion of the main body 110. The entire air frying assembly 120 adopts a nested configuration with an overall height of 50 mm. A stretch-formed structure (i.e., the accommodating groove 140) is provided at a top portion of the main body 110 for accommodating the air frying assembly 120, and the product bezel of the cooking appliance does not exceed 30 mm, thus achieving a narrow-bezel effect. Meanwhile, the main body 110 is provided with an air distribution plate 114, which is equipped with mesh holes (i.e., the air outlets 115). In this way, the air heated by the air frying assembly 120 is disturbed by the fan blades 124 and enters the cooking cavity 111 through the mesh holes to achieve the cooking effect.

In the above embodiment, a microwave system (i.e., the microwave assembly 130) is mounted at a bottom portion of the main body 110. A magnetron (i.e., the microwave generating device 131) is fixed to the waveguide assembly 136, and the waveguide assembly 136 is disposed at the center of the bottom portion of the main body 110 to realize microwave excitation. Then, the microwaves propagate from the waveguide assembly 136 through the waveguide port 135 into the waveguide cavity 133, and further enter the cooking cavity 111 through several feeding ports 134 from the waveguide cavity 133, thus achieving uniform microwave field intensity. This microwave system solution features a simple structure, small space occupation, easy manufacturability and low cost. The microwave heating effect of the microwave system on food ingredients is shown in FIG. 13. When the microwave system performs microwave heating on the food ingredients, the food ingredients can be uniformly heated to 83.8 °C.

In the above embodiment, the air frying assembly 120 and the magnetron generate a large amount of heat during operation. To ensure product safety, it is necessary to perform active and efficient heat dissipation on the cooking chamber assembly 100.In the above embodiment, the cooling fan bracket 181 and the control board bracket 180 are combined into an electrical compartment module, enabling quick assembly and replacement. Meanwhile, the cooling fan bracket 181 and the control board bracket 180 form a closed air duct. The heat dissipation motor 182 drives the cooling fan in the closed space to generate air flow, which passes the second air duct 152. By adjusting the position and shape of the opening of the air duct, the air volume of the second air duct 152 accounts for 20%, which dissipates heat from the micro-switch 170 and ensures the normal operation of the door assembly 160.The remaining 80% of the air volume flows through the first air duct 151 and first dissipates heat from the inverter and the control board. At the end of the first air duct 151, the first air duct 151 is split into two paths: 70% of the air volume passes the heat sink of the magnetron to ensure the normal operation of the microwave; 30% of the air volume flows through the fourth air duct 153 to perform active heat dissipation for the drive motor 123 in the air frying assembly 120 at a top portion of the main body 110, thus ensuring the normal temperatures of the components in the cooking mode of air frying.

The second aspect of the present application further provides a cooking appliance, which comprises the cooking chamber assembly 100 provided in the first aspect of the present application.

As the cooking appliance provided in the second aspect of the present application comprises the cooking chamber assembly 100 provided in the first aspect of the present application, it has all the beneficial effects of the cooking chamber assembly.

The cooking appliance comprises a microwave-air fryer combination appliance.

In the present application, the term of "a plurality of" indicates two or more than two, unless otherwise explicitly defined. Terms such as "mount", "connect with", "connect to" and "fix" shall be understood in a broad sense. For example, "connect with" may be a fixed connection, a detachable connection, or an integral connection; "connect to" may be a direct connection or an indirect connection through an intermediate medium. For those of ordinary skill in the art, the specific meanings of the above terms in the present application can be understood based on specific circumstances.

In the description of the present application, the description of the terms of "an embodiment", "some embodiments", "specific embodiment" and the like is intended to mean that the specific features, structures, materials or characteristics described in combination with the embodiments or examples are comprised in at least one embodiment or example of the present application. In the description, the illustrative expression of the above terms may not indicate the same embodiment or example. In addition, the described specific features, structures, materials or characteristics may be combined with each other in an appropriate method in one or more of any embodiments or examples.

The above-mentioned are merely some embodiments of the present application and are not intended to limit the present application, and for one skilled in the art, various modifications and changes may be made to the present application. Any modifications, equivalent substitutions, improvements and so on should be covered within the scope of protection of the present application.

## Claims

1. A cooking chamber assembly, comprising:
a main body, comprising a cooking cavity;
an air frying assembly configured to blow hot air into the cooking cavity, wherein a wall surface of the main body is provided with a plurality of accommodating recesses, at least part of the accommodating recesses are recessed in a direction towards the cooking cavity, and at least part of the air frying assembly is disposed in the accommodating recesses recessed towards the cooking cavity.

2. The cooking chamber assembly according to claim 1, wherein, the air frying assembly comprises:
a fan assembly configured to generate airflow; and
a heating assembly configured to heat the airflow generated by the fan assembly to form hot air;
wherein the main body comprises:
a first top plate forming a top wall of the cooking cavity, the plurality of accommodating recesses comprise a first accommodating recess and a second accommodating recess, the first accommodating recess and the second accommodating recess are arranged in the first top plate, the first accommodating recess is recessed towards the cooking cavity, the second accommodating recess protrudes away from the cooking cavity, at least part of the fan assembly is disposed in the first accommodating recess, and at least part of the heating assembly is disposed in the second accommodating recess.

3. The cooking chamber assembly according to claim 2, wherein, the fan assembly comprises:
a drive motor; and
a plurality of fan blades connected to the drive motor, the drive motor being configured to drive the plurality of fan blades to rotate and then to generate airflow;
wherein, the main body further comprises a second top plate disposed at a side of the first top plate away from the cooking cavity; the second top plate is provided with a third accommodating recess recessed towards the cooking cavity; at least part of the drive motor is disposed in the third accommodating recess, and at least part of the fan blades is disposed in the first accommodating recess.

4. The cooking chamber assembly according to claim 2, further comprising:
an air distribution plate arranged at a side of the fan assembly facing the cooking cavity, wherein, the air distribution plate is provided with a plurality of air outlets, and the air outlets are configured to discharge the airflow generated by the fan assembly into the cooking cavity.

5. The cooking chamber assembly according to claim 1, further comprising:
a microwave assembly disposed at a side of the main body away from the air frying assembly, wherein, a plurality of feeding ports are provided on a side of the microwave assembly facing the cooking cavity, and the microwave assembly radiates microwaves into the cooking cavity through the feeding ports.

6. The cooking chamber assembly according to claim 5, wherein, the microwave assembly comprises:
a microwave generating device configured to generate microwaves; and
a plurality of waveguide plates defining a waveguide cavity, wherein, the microwave generating device is in communication with the waveguide cavity, and the plurality of feeding ports are arranged in a top wall of the waveguide cavity.

7. The cooking chamber assembly according to claim 6, further comprising:
a waveguide port arranged in a bottom wall of the waveguide cavity, wherein the waveguide port is configured to communicate the waveguide cavity with the microwave generating device.

8. The cooking chamber assembly according to claim 5, wherein,
the air frying assembly is disposed at a top portion of the main body, and the microwave assembly is disposed at a bottom portion of the main body.

9. The cooking chamber assembly according to any one of claims 5 to 8, further comprising:
a cooling fan arranged at a bottom portion of the main body; and
an air duct assembly connected to the cooling fan, wherein, the air duct assembly extends along a wall surface of the main body to dissipate heat from a component inside the cooking chamber assembly.

10. The cooking chamber assembly according to claim 9, further comprising:
an inverter arranged at the bottom portion of the main body; and
a control board arranged at the bottom portion of the main body, wherein the control board is configured to control the operation of the air frying assembly and the microwave assembly;
the air duct assembly comprises:
a first air duct, wherein, the first air duct is connected to the cooling fan and passes the inverter and the control board to dissipate heat from the inverter and the control board.

11. The cooking chamber assembly according to claim 10, further comprising:
a door assembly movably connected to the main body; and
a microswitch connected to the door assembly, the microswitch being configured to open or close the door assembly;
the air duct assembly further comprises:
a second air duct, wherein the second air duct is in communication with the first air duct and extends towards the microswitch to dissipate heat from the microswitch.

12. The cooking chamber assembly according to claim 11, wherein,
a ratio of a cross-sectional area of the first air duct to a cross-sectional area of the second air duct is in a range of 7:3 to 9:1.

13. The cooking chamber assembly according to claim 11, wherein, the air duct assembly further comprises:
a third air duct, wherein the third air duct is in communication with an end of the first air duct away from the cooling fan and passes the microwave assembly to dissipate heat from the microwave assembly; and
a fourth air duct, wherein the fourth air duct is in communication with the end of the first air duct away from the cooling fan and extends towards the air frying assembly to dissipate heat from the air frying assembly.

14. The cooking chamber assembly according to claim 13, wherein,
a ratio of a cross-sectional area of the third air duct to a cross-sectional area of the fourth air duct is in a range of 6:4 to 8:2.

15. A cooking appliance, comprising:
a cooking chamber assembly according to any one of claims 1 to 14.

16. The cooking appliance according to claim 15, wherein, the cooking appliance comprises a microwave-air fryer combination appliance.
